# EUROPÄISCHE PATENTSCHRIFT

(11) **EP 1 891 368 B1**
(45) Veröffentlichungstag und Bekanntmachung des Hinweises auf die Patenterteilung: **29.07.2009**
(21) Anmeldenummer: 06742832.6
(22) Anmeldetag: 08.05.2006
(51) Int. Cl.: F21S 8/00

(54) **LEUCHTE MIT HAUPTLICHTQUELLE UND ZUSATZLICHTQUELLE**
LAMP WITH MAIN LIGHT SOURCE AND ADDITIONAL LIGHT SOURCE
DISPOSITIF D'ECLAIRAGE COMPRENANT UNE SOURCE DE LUMIERE PRINCIPALE ET UNE SOURCE DE LUMIERE SUPPLEMENTAIRE

(30) Priorität: 13.06.2005 DE 102005027261
(43) Veröffentlichungstag der Anmeldung: 27.02.2008
(73) Patentinhaber: Zumtobel Lighting GmbH, 6850 Dornbirn (AT)
(72) Erfinder: LADSTÄTTER, Gerald, A-6833 Klaus (AT)
(74) Vertreter: Thun, Clemens
(86) Internationale Anmeldenummer: PCT/EP2006/004288
(87) Internationale Veröffentlichungsnummer: WO 2006/133771

(56) Entgegenhaltungen:
- WO-A-20/04036618
- US-A1- 2002 126 478
- PATENT ABSTRACTS OF JAPAN Bd. 003, Nr. 154 (M-085), 18. Dezember 1979 (1979-12-18) -& JP 54 131365 A (MATSUSHITA ELECTRIC WORKS LTD), 12. Oktober 1979 (1979-10-12)

## Beschreibung

Die vorliegende Erfindung betrifft eine Leuchte gemäß dem Oberbegriff des Anspruchs 1, welche eine Hauptlichtquelle aufweist, deren Licht von der Leuchte abgestrahlt wird, sowie eine Zusatzlichtquelle, deren Licht mit dem Licht der Hauptlichtquelle vor dessen Abstrahlung vermischt wird.

Eine Leuchte der gattungsgemäßen Art ist beispielsweise aus der DE 102 16 645 A1 bekannt. Die Nutzung der verschiedenen Lichtquellen dient hier dem Zweck, die Spektralzusammensetzung des von der Leuchte abgegebenen Lichts zu beeinflussen. Hierbei ist vorgesehen, dass die Hauptlichtquelle Weißlicht abgibt, dem dann das farbige Licht der Zusatzlichquelle(n) zugemischt wird. Die Zusatzlichtquellen werden vorzugsweise durch LEDs gebildet, mit der Hilfe also eine gewünschte Farbtönung für das zur Beleuchtung verwendete Licht erzielt wird.

Die WO 2004/036618 offenbart eine Innenraumbeleuchtung mit einer Leuchtstoffröhre, die in einem Lichtleiter eingebettet ist und den Lichtleiter außen umgebenden zusätzlichen Lichtquellen, welche in den Lichtleiter hineinstrahlen und wodurch das von der Innenraumleuchte abgestrahlte Licht sich aus der Mischung dieser beiden Lichtquellen ergibt.

Durch die Nutzung unterschiedlicher Lichtquellen können also lichttechnisch ansprechende Effekte erzielt werden. Allerdings kann bei den bekannten Leuchten, welche auf dem oben beschriebenen Prinzip basieren, das Problem auftreten, dass die durch die Zusatzlichtquelle hervorgerufene farbliche Komponente nur unzureichend wahrgenommen wird. Diese Problematik besteht insbesondere dann, wenn der Unterschied zwischen dem von der Hauptlichtquelle erzeugten Lichtstrom und dem Lichtstrom der Zusatzlichtquelle(n) sehr hoch ist.

Der vorliegenden Erfindung liegt dementsprechend die Aufgabe zugrunde, bekannte Leuchten der gattungsgemäßen Art derart weiterzuentwickeln, daß der durch die Zusatzlichtquelle hervorgerufene Farbeffekt bewußt bzw. besser wahrgenommen werden kann.

Die Aufgabe wird durch eine Leuchte, welche die Merkmale des Anspruchs 1 aufweist, gelöst. Vorteilhafte Weiterbildungen der Erfindung sind Gegenstand der Unteransprüche.

Die vorliegende Erfindung basiert wiederum auf dem Gedanken, zwei Lichtquellen, eine Hauptlichtquelle sowie eine Zusatzlichtquelle einzusetzen, wobei eine erste Aufgabe der Zusatzlichtquelle darin besteht, dem von der Hauptlichtquelle abgestrahlten Licht eine Farbkomponente zu verleihen. Erfindungsgemäß ist nunmehr allerdings vorgesehen, daß diese Farbkomponente zusätzlich dadurch hervorgehoben wird, daß ein Teil des von der Zusatzlichtquelle abgegebenen Lichts im Hinblick auf das von der Hauptlichtquelle abgestrahlte Licht seitlich bzw. zur Rückseite hin gerichtet durch das Leuchtengehäuse abgegeben wird.

Erfindungsgemäß wird also eine Leuchte mit einer Hauptlichtquelle, deren Licht von der Leuchte abgestrahlt wird, sowie einer Zusatzlichtquelle, deren Licht mit dem Licht der Hauptlichtquelle vor dessen Abstrahlung vermischt wird, vorgeschlagen, wobei ein Teil des von der Zusatzlichtquelle abgegebenen Lichts im Hinblick auf das von der Hauptlichtquelle abgestrahlte Licht seitlich bzw. zur Rückseite hin gerichtet durch das Leuchtengehäuse abgegeben wird.

Gemäß der vorliegenden Erfindung wird dementsprechend das Licht der Zusatzlichtquelle zusätzlich dazu genutzt, das abgestrahlte Licht der Hauptlichtquelle oder einen von der Hauptlichtquelle bestrahlten Bereich zumindest teilweise zu begrenzen oder einzurahmen, wobei diese Umrahmung mit Licht in einer Farbe erfolgt, welche aufgrund der Beimischung des Lichts der Zusatzlichtquelle zu dem Licht der Hauptlichtquelle auch dem Farbcharakter des zur Raumbeleuchtung vorgesehenen Lichts entspricht. Das zur Umrahmung genutzte Licht ist allerdings farblich deutlich intensiver, so daß auf diese Weise eine Akzentuierung des Farbtons erfolgt. Hierdurch ergeben sich besonders angenehme Beleuchtungssituationen, welche für einen Beobachter bzw. eine sich innerhalb des beleuchteten Bereichs befindliche Person optisch sehr ansprechend wirken.

Der Gedanke, zur Allgemeinbeleuchtung vorgesehenes Licht leicht einzufärben, ist Bestandteil der sogenannten Active Light Strategie, bei der das Allgemeinlicht zeitabhängig leicht farblich verändert wird, um den üblichen Verlauf des Tageslichtes zu simulieren. Hierbei wird die Lichtfarbe über einen sehr langen Zeitraum hinweg nur relativ schwach verändert, was für den Menschen kaum sichtbar bzw. wahrnehmbar ist. Trotz allem hat diese leichte farbliche Beeinflussung des Lichts für die Allgemeinbeleuchtung zur Folge, daß sich das menschliche Wohlbefinden steigert, da auch in Räumen, welche vorwiegend oder ausschließlich von Kunstlicht beleuchtet werden, der Eindruck einer natürlichen Beleuchtung hervorgerufen wird. Dieser Effekt kann auch bei der erfindungsgemäßen Leuchte genutzt werden, wobei allerdings die geringe Farbverschiebung der Allgemeinbeleuchtung nunmehr optisch verstärkt wird. Eine beispielsweise geringe Senkung der Farbtemperatur der Allgemeinbeleuchtung kann also bei der erfindungsgemäßen Leuchte mittels einer optisch gut sichtbaren Blaufärbung der Akzentbeleuchtung verstärkt werden, wobei dieser Effekt erstmalig mit Hilfe einer einzigen Leuchte erzielt wird.

Um die angesprochenen erfindungsgemäßen lichttechnischen Effekte zu erzielen, kann die Leuchte in unterschiedlicher Weise ausgestaltet werden. Mögliche Varianten hierfür sind insbesondere Gegenstand der abhängigen Ansprüche.

So ist vorzugsweise vorgesehen, daß zum Vermischen des Lichts der beiden Lichtquellen eine Mischvorrichtung eingesetzt wird, welche beispielsweise durch ein transparentes Lichtlenkelement gebildet ist, in welches einerseits das von der Hauptlichtquelle abgegebene Licht sowie andererseits ein Teil des von der Zusatzlichtquelle abgegebenen Lichts eingestrahlt wird. Das Lichtlenkelement weist ferner eine Lichtabstrahlfläche auf, über welche das von beiden Lichtquellen eingekoppelte Licht als gemeinsames Mischlicht abgegeben wird. Dem Lichtlenkelement kann dann eine weitere transparente Lichtabstrahlplatte nachgeordnet sein, über welche das durch das Lichtlenkelement gebildete Mischlicht von der Leuchte abgestrahlt wird. Soll dieses Mischlicht derart in bestimmte Winkelbereiche abgestrahlt werden, daß Blendeffekte weitestgehend vermieden werden, so kann die Lichtabstrahlplatte beispielsweise eine Mikroprismenstruktur aufweisen. Auch der Einsatz von Leuchtenraster oder dergleichen wäre denkbar, um das zur Allgemeinbeleuchtung vorgesehene Licht blendfrei zu gestalten.

Das Lichtlenkelement zum Mischen der beiden Lichtkomponenten ist vorzugsweise plattenförmig ausgestaltet, wobei das Licht einer der beiden Lichtquellen über eine der Lichtabstrahlfläche gegenüberliegende Flachseite und das Licht der anderen Lichtquelle über eine Stirnseite in das Lichtlenkelement eingekoppelt wird. In Lichtabstrahlrichtung gesehen kann ferner vor dem Lichtlenkelement ein transparentes zweites Lichtlenkelement angeordnet sein, in welches das Licht einer der beiden Lichtquellen seitlich eingestrahlt wird, wobei dieses Licht dann über eine der Flachseite des Lichtlenkelements zugewandte Fläche abgegeben und auf diese Weise in das Lichtlenkelement eingestrahlt wird. Hierbei handelt es sich vorzugsweise um das Licht der Hauptlichtquelle, da auf diese Weise erreicht wird, daß dieses Licht möglichst gleichmäßig über die gesamte Lichtabstrahlfläche der Leuchte abgegeben wird.

Zum Erzielen der erfindungsgemäßen Akzentbeleuchtung kann der Zusatzlichtquelle beispielsweise ein weiteres Lichtleitelement zugeordnet sein, über welches ein Teil des von der Zusatzlichtquelle abgegebenen Lichts im Hinblick auf das von der Leuchte abgestrahlte Allgemeinlicht seitlich, insbesondere schräg nach hinten auf eine Wand oder Decke, an welcher die Leuchte zu befestigen ist, gerichtet wird. Dieses Lichtleitelement, mit dessen Hilfe die farblich akzentuierte Einrahmung der Lichtabstrahlfläche der Leuchte erzielt wird, kann beispielsweise in einer seitlichen Öffnung des Leuchtengehäuses angeordnet sein.

Alternativ zur Verwendung des Lichtleitelementes für die Realisierung der Akzentbeleuchtung könnte allerdings beispielsweise auch ein Reflektor vorgesehen sein, über welchen ein Teil des von der Zusatzlichtquelle abgegebenen Lichts seitlich durch eine Öffnung des Leuchtengehäuses abgestrahlt wird.

Die Zusatzlichtquelle wird - wie bereits erwähnt - vorzugsweise durch mehrere LED's gebildet, welche ein farbiges Licht abgeben. Hierbei wäre insbesondere auch denkbar, verschiedenfarbige LEDs zu nutzen, um durch eine entsprechende Ansteuerung dieser einzelnen LEDs einen gewünschten Mischfarbton zu erzielen. Die Hauptlichtquelle für die Allgemeinbeleuchtung wird vorzugsweise durch zumindest eine Gasentladungslampe, insbesondere eine Leuchtstoffröhre gebildet.

Nachfolgend soll die Erfindung anhand der beiliegenden Zeichnung näher erläutert werden. Es zeigen:
- Fig. 1: die Frontansicht einer an einer Wand oder Decke befestigten erfindungsgemäßen Leuchte;
- Fig. 2: eine schematische Schnittdarstellung der erfindungsgemäßen Leuchte;
- Fig. 3: eine erste Variante zur Ausgestaltung der Leuchte für die Realisierung der Akzentbeleuchtung und
- Fig. 4: eine zwei Variante zur möglichen Ausgestaltung der erfindungsgemäßen Leuchte.

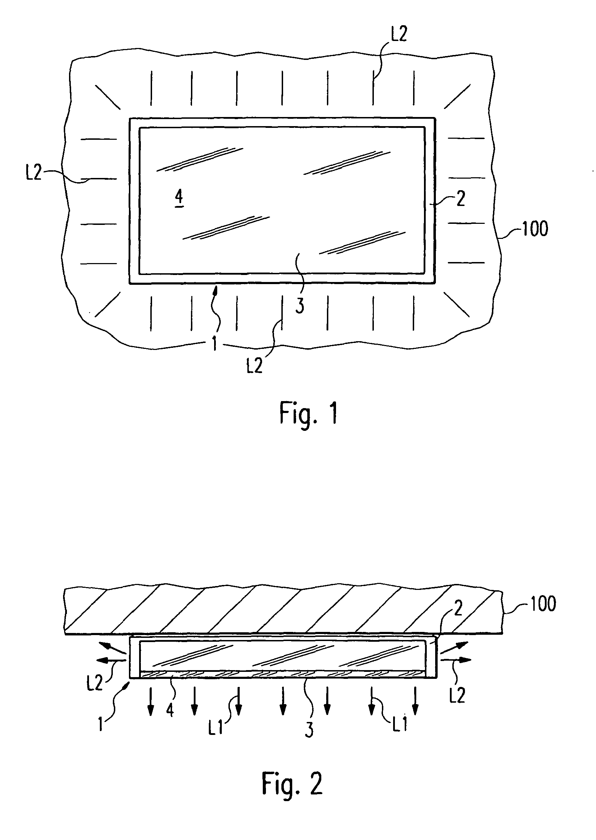

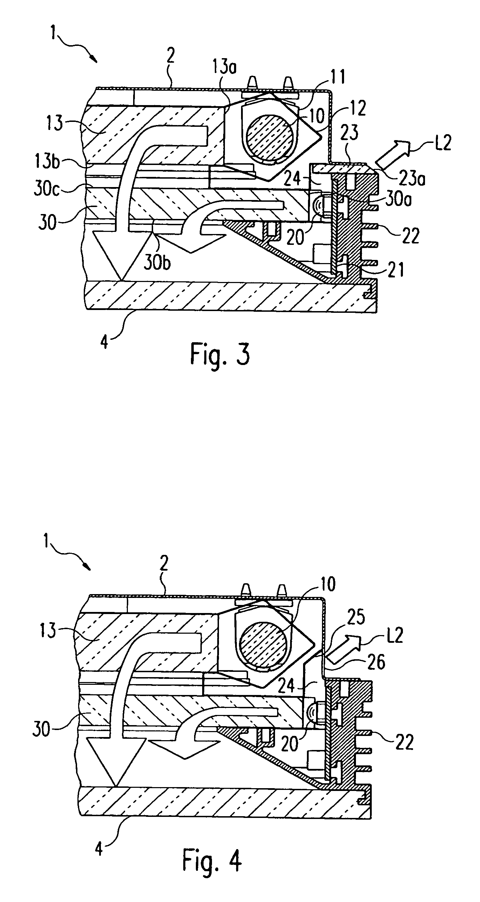

Bevor anhand der Fig. 3 und 4 konkrete Ausführungsformen zur Ausgestaltung der erfindungsgemäßen Leuchte erläutert werden, soll zunächst anhand der Fig. 1 und 2 die allgemeine Ausgestaltung der Leuchte im Hinblick auf die damit erzielbaren lichttechnischen Effekte diskutiert werden. Hierbei wird davon ausgegangen, daß die allgemein mit dem Bezugszeichen 1 versehene Leuchte an einer Decke 100 eines zu beleuchtenden Raumes angeordnet ist. Selbstverständlich wäre es allerdings auch denkbar, die Leuchte 1 an einer Wand, also vertikal ausgerichtet anzuordnen.

Die erfindungsgemäße Leuchte 1 weist zunächst ein Leuchtengehäuse 2 auf, innerhalb dessen die später noch näher beschriebenen einzelnen Komponenten zum Erzielen der lichttechnischen Effekte angeordnet sind. Gleichzeitig grenzt das Leuchtengehäuse 2 eine an seiner Unterseite befindliche Lichtaustrittsfläche 3 ein, über welche das zur Beleuchtung eines Raumes, in dem die Leuchte angeordnet ist, vorgesehene Licht, welches im Folgenden auch als Allgemeinlicht bezeichnet wird, abgestrahlt werden soll. Innerhalb dieser Lichtaustrittsöffnung 3 ist im dargestellten Ausführungsbeispiel eine transparente Lichtabstrahlplatte 4 angeordnet, über welche die Lichtabstrahlung erfolgt. Je nachdem, ob das zur Allgemeinbeleuchtung vorgesehene Licht diffus oder gerichtet abgestrahlt werden soll, kann diese Lichtabstrahlplatte 4 lichtstreuend ausgebildet sein oder beispielsweise eine Mikroprismenstruktur aufweisen, über welche das abgestrahlte Licht lediglich in bestimmten Winkelbereichen abgegeben wird. Für den Fall, daß eine gerichtete Lichtabstrahlung gewünscht ist, könnte ferner auch der Einsatz eines Leuchtenrasters oder eines vergleichbaren lichtlenkenden Elements vorgesehen sein. In diesem Fall könnte auf die Lichtabstrahlplatte 4 ggf. auch verzichtet werden.

Innerhalb des Leuchtengehäuses 2 sind zwei (in den Fig. 1 und 2 nicht dargestellte) verschiedene Arten von Lichtquellen angeordnet, eine erste Lichtquelle, die sogenannte Hauptlichtquelle, sowie eine zweite Lichtquelle, die als Zusatzlichtquelle bezeichnet wird. Aufgabe der Hauptlichtquelle ist es, den Hauptanteil des zur Raum- bzw. Allgemeinbeleuchtung vorgesehenen Lichts bereitzustellen. Das Licht dieser Hauptlichtquelle wird also über die Lichtaustrittsöffnung 3 des Leuchtengehäuses 2 abgegeben. Aufgabe der Akzent- bzw. Zusatzlichtquelle ist es zunächst, das zur Raum- bzw. Allgemeinbeleuchtung vorgesehene Licht leicht einzufärben. Hierfür ist vorgesehen, daß das von der Zusatzlichtquelle abgegebene Licht zu einem gewissen Anteil dem Licht der Hauptlichtquelle beigemischt wird. Das mit dem Bezugszeichen L1 versehene und zur Allgemeinbeleuchtung vorgesehene Licht besteht dementsprechend nicht nur aus dem Licht der Hauptlichtquelle, sondern stellt stattdessen ein Mischlicht dar, welches sich aus dem Licht beider Lichtquellen zusammensetzt. Da die Hauptlichtquelle üblicherweise weißes Licht abgeben wird, wird somit mit Hilfe der Zusatzlichtquelle dem allgemeinen Licht eine gewisse Farbnuance verliehen.

Da allerdings der Lichtstrom der Hauptlichtquelle in der Regel deutlich höher ist als derjenige der Zusatzlichtquelle, kann der Fall auftreten, dass die Einfärbung des allgemeinen Lichts zunächst kaum wahrnehmbar ist. Dieser Effekt wird allerdings nunmehr dadurch hervorgehoben bzw. betont, daß gleichzeitig das Leuchtengehäuse von einem Akzentlicht 2 umrahmt ist, welches deutlich kräftiger in der Farbe und dementsprechend besser wahrnehmbar ist.

Entsprechend der Darstellung in den Fig. 1 und 2 wird dementsprechend das Licht L2 der Zusatzlichtquelle zusätzlich auch seitlich, insbesondere seitlich schräg nach oben gerichtet abgestrahlt, um den umgebenen Deckenbereich aufzuhellen. Auf diese Weise wird eine Indirektbeleuchtung erzielt, wobei diese allerdings nicht zur Raumbeleuchtung genutzt werden soll. Statt dessen soll lediglich eine Akzentuierung der Leuchte 1 erzielt, also ein leichter farbiger Rand am umgebenen Deckenbereich hervorgerufen werden, der den gleichen Farbton wie das Allgemeinlicht aufweist, allerdings deutlich intensiver und dementsprechend besser wahrnehmbarer ist. Auf diese Weise wird ein besonderer lichttechnischer Effekt erzielt, welcher der Leuchte 1 ein interessantes Aussehen verleiht und gleichzeitig für einen Betrachter optisch ansprechend wirkt. Das Akzentlicht L2 kann dabei - wie dargestellt - das Leuchtengehäuse vollständig einrahmen, es wäre allerdings auch denkbar, dass dieses Licht lediglich zu bestimmten Seiten hin abgegeben wird, beispielsweise um an zwei einander gegenüberliegenden Stirnseiten eine Akzentuierung hervorzurufen.

Eine erste Möglichkeit zur Ausgestaltung der Leuchte 1, um die erfindungsgemäßen lichttechnischen Effekte zu erzielen, ist nunmehr in Fig. 3 dargestellt. Diese Schnittdarstellung eines Seitenbereichs der Leuchte 1 zeigt, daß innerhalb des Leuchtengehäuses 2 zum einen eine Hauptlichtquelle 10 in Form einer Gasentladungslampe, insbesondere einer Leuchtstoffröhre, sowie eine Zusatzlichtquelle 20 in Form mehrerer LED's angeordnet sind. Die Leuchtstoffröhre 10 ist dabei mittels einer Fassung 11 in dem Gehäuse 2 gehalten, wobei die Fassung 11 an der Bodenseite des Gehäuses 2 verrastet ist. Die LED's 20 wiederum sind auf einer Montageschiene 21 befestigt, welche an einem Profilteil 22 angeordnet ist, welches zur Vorderseite hin das Leuchtengehäuse 2 abschließt und die Halterung für die diversen optischen Elemente der Leuchte 1 bildet. Anzumerken ist, dass die Leuchte 1 vorzugsweise symmetrisch ausgestaltet ist und dementsprechend zu beiden Seiten der noch zu beschreibenden optischen Elemente Leuchtstoffröhren bzw. LED's als Haupt- und Zusatzlichtquellen angeordnet sind.

Ein wesentliches Element der erfindungsgemäßen Leuchte 1 zum Erzielen der oben erläuterten lichttechnischen Effekte ist eine Mischvorrichtung, die im dargestellten Ausführungsbeispiel durch ein transparentes Lichtlenkelement 30 gebildet ist. Dieses Lichtlenkelement 30 ist insbesondere plattenförmig ausgestaltet und dient dazu, das Licht beider Lichtquellen 10 und 20 miteinander zu vermischen, was dadurch erreicht wird, daß das Licht beider Lichtquellen 10, 20 in das Lichtlenkelement 30 einkoppelt und gemeinsam als Mischlicht wieder abgegeben wird. Die Einkopplung des Lichts der LED's 20 erfolgt über eine Stirnseite 30a des Lichtlenkelements 30, während hingegen das Licht der Leuchtstoffröhre 10 über die der Lichtaustrittsfläche 30b gegenüberliegende Flachseite 30c eingekoppelt wird.

Um sicherzustellen, daß die Lichtabgabe möglichst gleichmäßig über die gesamte Lichtabstrahlfläche der Leuchte 1 erzielt wird, müssen Maßnahmen getroffen werden, durch welche gewährleistet ist, daß das Licht der Hauptlichtquelle 10 möglichst gleichmäßig in das Lichtlenkelement 30 eingestrahlt wird. Aus diesem Grund ist vor der Mischvorrichtung ein zweites Lichtlenkelement 13 in Form einer weiteren transparenten Platte vorgesehen, in welche das Licht der Leuchtstoffröhre 10 von einer Stirnseite 13a her wiederum seitlich eingekoppelt und über die der Flachseite 30c des Lichtlenkelements 30 zugewandte Flachseite 13b ausgekoppelt wird. Derartige transparente Lichtlenkelemente zum gleichmäßigen flächigen Abgeben von seitlich eingekoppeltem Licht sind aus dem Stand der Technik bereits hinlänglich bekannt und müssen dementsprechend nicht näher beschrieben werden. Der Vorteil dieser Elemente besteht darin, dass das seitlich eingekoppelte Licht derart umgelenkt wird, dass es das Element mit einer homogenen Lichtstärkeverteilung wieder verläßt. Das von der Zusatzlichtquelle 20 in das Lichtlenkelement bzw. die Mischvorrichtung 30 eingekoppelte Licht wirkt also dann mit dem Licht der Hauptlichtquelle 10 derart zusammen, dass in einem von der erfindungsgemäßen Leuchte beleuchteten Bereich ein gut durchmischtes Mischlicht auftrifft, welches keine Farbschatten aufweist. Um möglichst das gesamte Licht der Leuchtstoffröhre 10 nutzen zu können, ist vorgesehen, daß diese von einem der Reflektor 12 umgeben ist, welcher stirnseitig an das zweite Lichtlenkelement 13 angrenzt.

Wie durch die beiden Pfeile angedeutet ist, wird somit das Licht beider Lichtquellen, der Hauptlichtquelle 10 und der Zusatzlichtquelle 20 in die Mischvorrichtung 30 eingekoppelt, durch welche dann beide Lichtkomponenten gemeinsam abgegeben und letztendlich über die Lichtabstrahlplatte 4 der Leuchte 2 abgestrahlt werden. Das hierbei gebildete Licht zur Allgemeinbeleuchtung besteht somit im wesentlichen aus dem Weißlicht der Leuchtstoffröhre 10, ist allerdings mit einer leichten farblichen Nuance versehen, welche durch die LED's 20 hervorgerufen werden.

Der in dem Licht für die Allgemeinbeleuchtung kaum wahrnehmbare Farbton wird nunmehr dadurch optisch sichtbar gemacht, daß ein Teil des von den LED's 20 abgegebenen Lichts nicht in die Mischvorrichtung 30 eingekoppelt, sondern statt dessen schräg seitlich nach hinten abgegeben wird. Hierfür ist ein weiterer Lichtleiter 23 vorgesehen, der den LED's 20 zugeordnet und derart in einer Öffnung des Gehäuses 2 bzw. einem Zwischenraum zwischen dem Gehäuse 2 und dem Profilelement 22 angeordnet ist, daß das von den LED's 20 in diesen Lichtleiter 23 eingekoppelte Licht seitlich aus dem Leuchtengehäuse 2 herausgeführt wird. Um sicherzustellen, daß dieses Licht den umgebenen Deckenbereich, an dem die Leuchte 1 montiert ist, aufhellt, weist der Lichtleiter 23 an seinem Ende eine Abschrägung 23a auf, welche das Licht in geeigneter Weise bricht und dementsprechend zur Rückseite hin ablenkt.

Eine alternative Ausführungsform zu dem Lichtleiter 23 ist in Fig. 4 dargestellt. In diesem Fall ist wiederum oberhalb der LED's 20 in dem Gehäuse 2 eine Öffnung 26 vorgesehen, wobei allerdings nunmehr ein weiterer Reflektor 25 in der Nähe der LED's 20 angeordnet ist, der derart ausgestaltet ist, daß das Licht der LED's 20, welches über einen oberen Freiraum 24 auf diesen Reflektor 25 fällt, durch die Öffnung 26 wiederum schräg seitlich nach oben abgestrahlt wird. Die weiteren Komponenten der Leuchte zum Erzielen des Mischlichts für die Allgemeinbeleuchtung entsprechend der Darstellung in Fig. 3.

Durch die dargestellten Maßnahmen können also die besonderen lichttechnischen Effekte, nämlich einerseits die Vermischung der beiden Lichtkomponenten zur Allgemeinbeleuchtung sowie andererseits das seitliche Auskoppeln des Lichts der Zusatzlichtquellen für die Indirektbeleuchtung erzielt werden. Anzumerken ist, dass auch der Einsatz verschiedenfarbiger LED's vorgesehen sein kann, um den Farbton für das Akzentlicht bzw. die Farbnuance des Allgemeinlichts in gewünschter Weise zu beeinflussen. Beispielsweise könnte durch die geeignete Ansteuerung von LED's in den Farben Rot, Grün und Blau ein beliebiger Farbton erzielt werden. Hierbei könnte dann beispielsweise vorgesehen sein, daß der Farbton im Laufe des Tages leicht angepaßt wird, um den Eindruck einer natürlichen Beleuchtung hervorzurufen.

Darüber hinaus ist anzumerken, daß anstelle des dargestellten Lichtlenkelements zum Erzielen des Mischlichts für die Allgemeinbeleuchtung auch andere Maßnahmen zur Lichtmischung vorgesehen sein können. Die in den Figuren dargestellte Ausführungsform hat sich allerdings als vorteilhaft herausgestellt, da hierdurch eine besonders gleichmäßige Abstrahlung des Mischlichts erzielt werden kann. Alternativ zur Indirektbeleuchtung wäre es ferner auch denkbar, die Abstrahlfläche für die Allgemeinbeleuchtung mit einer weiteren Abstrahlfläche einzurahmen, über welche das Licht der Zusatzlichtquelle(n) diffus abgestrahlt wird.

Insgesamt wird also eine Leuchte geschaffen, durch welche besonders ansprechende optische Effekte erzielt werden können. Hierdurch werden die Einsatzmöglichkeiten für die erfindungsgemäße Leuchte deutlich erweitert.

## Patentansprüche

1. Leuchte (1) mit einem Leuchtengehäuse (2) und mit einer Hauptlichtquelle (10), deren Licht von der Leuchte (1) abgestrahlt wird, sowie einer Zusatzlichtquelle (20), deren Licht mit dem Licht der Hauptlichtquelle (10) vor dessen Abstrahlung vermischt wird,
**dadurch gekennzeichnet,**
**dass** ein Teil des von der Zusatzlichtquelle (20) abgegebenen Lichts im Hinblick auf das von der Hauptlichtquelle (10) abgestrahlte Licht seitlich bzw. zur Rückseite hin gerichtet durch das Leuchtengehäuse (2) abgegeben wird.

2. Leuchte nach Anspruch 1,
**gekennzeichnet durch**
eine Mischvorrichtung (30), mittels welcher das von der Zusatzlichtquelle (20) abgegebenen Licht dem Licht der Hauptlichtquelle (10) beigemischt wird.

3. Leuchte nach Anspruch 2,
**dadurch gekennzeichnet,**
**dass** die Mischvorrichtung durch ein transparentes Lichtlenkelement (30) gebildet ist, in welches das von der Hauptlichtquelle (10) abgegebene Licht sowie ein Teil des von der Zusatzlichtquelle (20) abgegebenen Lichts eingestrahlt wird,
wobei das Lichtlenkelement (30) eine Lichtabstrahlfläche (30b) aufweist, über welche das von beiden Lichtquellen (10, 20) eingekoppelte Licht als Mischlicht abgegeben wird.

4. Leuchte nach Anspruch 3,
**dadurch gekennzeichnet,**
**dass** dem Lichtlenkelement (30) eine weitere transparente Lichtabstrahlplatte (4) nachgeordnet ist, über welche das durch das Lichtlenkelement (30) gebildete Mischlicht von der Leuchte (1) abgegeben wird.

5. Leuchte nach Anspruch 4,
**dadurch gekennzeichnet,**
**dass** die Lichtabstrahlplatte (4) eine Mikroprismenstruktur aufweist.

6. Leuchte nach Anspruch 4,
**dadurch gekennzeichnet,**
**dass** die Lichtabstrahlplatte (4) lichtstreuend ausgestaltet ist.

7. Leuchte nach Anspruch 3,
**dadurch gekennzeichnet,**
**dass** dem Lichtlenkelement (30) eine Rasteranordnung zur Abstrahlung des Mischlichts in einen vorgegebenen Winkelbereich nachgeordnet ist.

8. Leuchte nach einem der Ansprüche 3 bis 7,
**dadurch gekennzeichnet,**
**dass** das Lichtlenkelement (30) plattenförmig ausgestaltet ist, wobei das Licht einer der beiden Lichtquellen (10, 20) über eine der Lichtabstrahlfläche (30b) gegenüberliegende Flachseite (30c) und das Licht der anderen Lichtquelle (10, 20) über eine Stirnseite (30a) in das Lichtlenkelement (30) eingekoppelt wird.

9. Leuchte nach Anspruch 8,
**dadurch gekennzeichnet,**
**dass** - in Lichtabstrahlrichtung gesehen - vor dem Lichtlenkelement (30) ein transparentes zweites Lichtlenkelement (13) angeordnet ist, in welches das Licht einer der beiden Lichtquellen (10, 20) seitlich eingestrahlt wird, wobei dieses Licht über eine der Flachseite (30c) des Lichtlenkelements (30) zugewandte Fläche abgegeben und in das Lichtlenkelement (30) eingestrahlt wird.

10. Leuchte nach einem der vorherigen Ansprüche,
**dadurch gekennzeichnet,**
**dass** der Zusatzlichtquelle (20) ein Lichtleitelement (23) zugeordnet ist, über welches ein Teil des von der Zusatzlichtquelle (20) abgegebenen Lichts im Hinblick auf das von der Hauptlichtquelle (10) abgestrahlten Lichts seitlich abgegeben wird.

11. Leuchte nach Anspruch 10,
**dadurch gekennzeichnet,**
**dass** das Lichtleitelement (23) in einer seitlichen Öffnung des Leuchtengehäuses (2) angeordnet ist.

12. Leuchte nach einem der Ansprüche 1 bis 9,
**dadurch gekennzeichnet,**
**dass** der Zusatzlichtquelle (20) ein Reflektor (25) zugeordnet ist, über welchen ein Teil des von der Zusatzlichtquelle (20) abgegebenen Lichts seitlich durch eine Öffnung (26) des Leuchtengehäuses (2) abgestrahlt wird.

13. Leuchte nach einem der Ansprüche 10 bis 12,
**dadurch gekennzeichnet,**
**dass** das Lichtlenkelement (23) bzw. der Reflektor (25) derart ausgestaltet ist, dass das seitlich abgegebene Licht auf eine Wand oder Decke, an welcher die Leuchte (1) zu befestigen ist, gerichtet ist.

14. Leuchte nach einem der vorherigen Ansprüche,
**dadurch gekennzeichnet,**
**dass** das von der Zusatzlichtquelle (20) abgegebene Licht farbig ist. ,

15. Leuchte nach Anspruch 14,
**dadurch gekennzeichnet,**
**dass** die Zusatzlichtquelle durch mehrere LEDs (20) gebildet ist.

16. Leuchte nach Anspruch 15,
**dadurch gekennzeichnet,**
**dass** mehrere verschiedenfarbige LEDs (20) vorgesehen sind.

17. Leuchte nach einem der vorherigen Ansprüche,
**dadurch gekennzeichnet,**
**dass** die Hauptlichtquelle durch zumindest eine Gasentladungslampe, insbesondere eine Leuchtstoffröhre (10) gebildet ist.

## Claims

1. Luminaire (1) having a luminaire housing (2) and having a main light source (10) the light of which is emitted by the luminaire (1), and an additional light source (20) the light of which is mixed with the light of the main light source (10) before its emission,
**characterised in that**
a part of the light issued by the additional light source (20) is issued through the luminaire housing (2) directed to the side or to the rear side, with respect to the light emitted by the main light source (10).

2. Luminaire according to claim 1,
**characterised by**
a mixing device (30), by means of which the light issued by the additional light source (20) is mixed with the light of the main light source (10).

3. Luminaire according to claim 2,
**characterised in that**
the mixing device is formed by a transparent light guide element (30) into which the light issued by the main light source (10), and a part of the light issued by the additional light source (20), is emitted,
wherein the light guide element (30) has a light emission surface (30b) via which the light coupled in by the two light sources (10, 20) is issued as mixed light.

4. Luminaire according to claim 3,
**characterised in that**
arranged downstream of the light guide element (30) there is a further transparent light emission plate (4), via which the mixed light formed by the light guide element (30) is issued from the luminaire (1).

5. Luminaire according to claim 4,
**characterised in that**
the light emission plate (4) has a microprism structure.

6. Luminaire according to claim 4,
**characterised in that**
the light emission plate (4) is configured to scatter light.

7. Luminaire according to claim 3,
**characterised in that**
arranged downstream of the light guide element (30) there is a raster arrangement for the emission of the mixed light in a predetermined angular range.

8. Luminaire according to any of claims 3 to 7,
**characterised in that**
the light guide element (30) is configured in the form of a plate, wherein the light of one of the two light sources (10, 20) is coupled into the light guide element (30) via a flat side (30c) lying opposite the light emission surface (30b) and the light of the other light source (10, 20) is coupled into the light guide element (30) via an end side (30a).

9. Luminaire according to claim 8,
**characterised in that**
seen in the light emission direction, arranged in front of the light guide element (30) there is a transparent second light guide element (13), into which the light of one of the two light sources (10, 20) is emitted at the side, wherein this light is issued over a surface towards the flat side (30c) of the light guide element (30) and is emitted into the light guide element (30).

10. Luminaire according to any preceding claim,
**characterised in that**
a light conducting element (23) is associated with the additional light source (20), via which element a part of the light issued by the additional light source (20) is issued, to the side with respect to the light emitted by the main light source (10).

11. Luminaire according to claim 10,
**characterised in that**
the light conducting element (23) is arranged in a side opening of the luminaire housing (2).

12. Luminaire according to any of claims 1 to 9,
**characterised in that**
associated with the additional light source (20) there is a reflector (25) via which a part of the light issued by the additional light source (20) is emitted to the side via an opening (26) of the luminaire housing (2).

13. Luminaire according to any of claims 10 to 12,
**characterised in that**
the light guide element (23) or the reflector (25) is configured in such a way that the light issued to the side is directed onto a wall or ceiling to which the luminaire (1) is to be fastened.

14. Luminaire according to any preceding claim,
**characterised in that**
the light issued by the additional light source (20) is coloured.

15. Luminaire according to claim 14,
**characterised in that**
the additional light source is formed by a plurality of LEDs (20).

16. Luminaire according to claim 15,
**characterised in that**
a plurality of differently coloured LEDs (20) are provided.

17. Luminaire according to any preceding claim, **characterised in that** the main light source is formed by at least one gas-discharge lamp, in particular a fluorescent lamp (10).

## Revendications

1. Dispositif d'éclairage (1) comportant un boîtier (2) de dispositif d'éclairage et une source de lumière principale (10) dont la lumière est émise par le dispositif d'éclairage (1), ainsi qu'une source de lumière supplémentaire (20) dont la lumière, avant d'être émise, est mélangée avec la lumière de la source de lumière principale (10),
**caractérisé en ce**
**qu'**une partie de la lumière émise par la source de lumière supplémentaire (20), en tenant compte de la lumière émise par la source de lumière principale (10), est diffusée latéralement et/ou dirigée vers l'arrière au moyen du boîtier (2) de dispositif d'éclairage.

2. Dispositif d'éclairage selon la revendication 1,
**caractérisé par**
un mélangeur (30) au moyen duquel la lumière diffusée par la source de lumière supplémentaire (20) est mélangée avec la lumière de la source de lumière principale (10).

3. Dispositif d'éclairage selon la revendication 2,
**caractérisé en ce**
**que** le mélangeur est formé au moyen d'un élément orientant la lumière (30) transparent dans lequel la lumière diffusée par la source de lumière principale (10) ainsi qu'une partie de la lumière diffusée par la source de lumière supplémentaire (20) sont irradiées,
sachant que l'élément orientant la lumière (30) comprend une surface de rayonnement de la lumière (30b) sur laquelle est diffusée la lumière couplée par les deux sources de lumière (10, 20) comme une lumière mixte.

4. Dispositif d'éclairage selon la revendication 3,
**caractérisé en ce**
**que** l'élément orientant la lumière (30) est suivi d'une autre plaque de rayonnement de la lumière (4) transparente à travers laquelle le dispositif d'éclairage (1) diffuse la lumière mixte formée par l'élément orientant la lumière (30).

5. Dispositif d'éclairage selon la revendication 4,
**caractérisé en ce**
**que** la plaque de rayonnement de lumière (4) comprend une structure microprismatique.

6. Dispositif d'éclairage selon la revendication 4,
**caractérisé en ce**
**que** la plaque de rayonnement de lumière (4) est arrangée de manière à diffuser la lumière.

7. Dispositif d'éclairage selon la revendication 3,
**caractérisé en ce**
**que** l'élément orientant la lumière (30) est suivi d'un agencement en quadrillage pour le rayonnement de la lumière mixte dans une région angulaire spécifiée.

8. Dispositif d'éclairage selon l'une quelconque des revendications 3 à 7,
**caractérisé en ce**
**que** l'élément orientant la lumière (30) est réalisé en forme de plaque, sachant que la lumière d'une des deux sources de lumière (10, 20) à travers un côté plat (30c) opposé à la surface de rayonnement de lumière (30b) et la lumière de l'autre source de lumière (10, 20) à travers un côté frontal (30a) dans l'élément orientant la lumière (30) sont couplées.

9. Dispositif d'éclairage selon la revendication 8,
**caractérisé en ce**
**que** - dans le sens de rayonnement de la lumière - un second élément orientant la lumière (13) transparent est agencé avant l'élément orientant la lumière (30) dans lequel la lumière d'une des deux sources de lumière (10, 20) est diffusée latéralement, sachant que cette lumière est émise à travers une surface face au côté plat (30c) de l'élément orientant la lumière (30) et est diffusée dans l'élément orientant la lumière (30).

10. Dispositif d'éclairage selon l'une quelconque des revendications précédentes,
**caractérisé en ce**
**qu'**à la source de lumière supplémentaire (20) est affectée un élément conducteur de lumière (23) par l'intermédiaire duquel une partie de la lumière émise par la source de lumière supplémentaire (20) est émise latéralement en considération de la lumière émise par la source de lumière principale (10).

11. Dispositif d'éclairage selon la revendication 10,
**caractérisé en ce**
**que** l'élément conducteur de lumière (23) est agencé dans une ouverture latérale du boîtier (2) de dispositif d'éclairage.

12. Dispositif d'éclairage selon l'une quelconque des revendications 1 à 9,
**caractérisé en ce**
**qu'**à la source de lumière supplémentaire (20) est affecté un réflecteur (25) par l'intermédiaire duquel une partie de la lumière émise par la source de lumière supplémentaire (20) est émise latéralement à travers une ouverture (26) du boîtier (2) de dispositif d'éclairage.

13. Dispositif d'éclairage selon l'une quelconque des revendications 10 à 12,
**caractérisé en ce**
**que** l'élément orientant la lumière (23) et/ou le réflecteur (25) sont réalisés de telle sorte que la lumière diffusée latéralement est orientée sur une paroi ou un plafond sur laquelle/lequel le dispositif d'éclairage (1) doit être fixé.

14. Dispositif d'éclairage selon l'une quelconque des revendications précédentes,
**caractérisé en ce**
**que** la lumière diffusée par la source de lumière supplémentaire (20) est colorée.

15. Dispositif d'éclairage selon la revendication 14,
**caractérisé en ce**
**que** la source de lumière supplémentaire est formée de plusieurs LED (20).

16. Dispositif d'éclairage selon la revendication 15,
**caractérisé en ce**
**que** plusieurs LED (20) de couleurs différentes sont prévues.

17. Dispositif d'éclairage selon l'une quelconque des revendications précédentes,
**caractérisé en ce**
**que** la source de lumière principale est formée au moyen d'au moins une lampe à décharge de gaz, en particulier d'un tube fluorescent (10).
